# EUROPÄISCHE PATENTSCHRIFT

(11) **EP 3 814 181 B1**
(45) Veröffentlichungstag und Bekanntmachung des Hinweises auf die Patenterteilung: **03.08.2022**
(21) Anmeldenummer: 19727337.8
(22) Anmeldetag: 24.05.2019
(51) Int. Cl.: B60T 7/12

(54) **HYDRAULISCHES BREMSSYSTEM FÜR EIN FAHRZEUG MIT MINDESTENS ZWEI ACHSEN**
HYDRAULIC BRAKE SYSTEM FOR VEHICLE WITH TWO OR MORE AXLES
SYSTÈME DE FREIN HYDRAULIQUE POUR VÉHICULE AVEC AU MOINS DEUX ESSIEUX

(30) Priorität: 28.06.2018 DE 102018210566
(43) Veröffentlichungstag der Anmeldung: 05.05.2021
(73) Patentinhaber: Robert Bosch GmbH, 70442 Stuttgart (DE)
(72) Erfinder: FRIEDRICH, Thomas, 74379 Ingersheim (DE); DROTLEFF, Dirk, 71720 Oberstenfeld-Gronau (DE); KLEEMANN, Ralf, 71726 Benningen Am Neckar (DE); BRENNDOERFER, Daniel, 71638 Ludwigsburg (DE); HIENZ, Bernd, 71640 Ludwigsburg (DE)
(86) Internationale Anmeldenummer: PCT/EP2019/063484
(87) Internationale Veröffentlichungsnummer: WO 2020/001880

(56) Entgegenhaltungen:
- EP-A2- 2 754 592
- DE-A1-102011 003 346
- DE-A1-102013 224 783
- FR-A1- 2 588 813
- US-A1- 2016 009 267

## Beschreibung

Die Erfindung geht aus von einem hydraulischen Bremssystem für ein Fahrzeug mit mindestens zwei Achsen, insbesondere für ein hochautomatisiertes oder autonomes Fahrzeug, nach der Gattung des unabhängigen Patentanspruchs 1.

Aus dem Stand der Technik sind Fahrzeuge mit mindestens einer hochautomatisierten oder autonomen Fahrfunktion bekannt, welche zumindest teilweise eine tatsächliche Fahraufgabe übernehmen können. Dadurch können die Fahrzeuge hochautomatisiert oder autonom fahren, indem die Fahrzeuge beispielsweise den Straßenverlauf, andere Verkehrsteilnehmer oder Hindernisse selbständig erkennen und die entsprechenden Ansteuerbefehle im Fahrzeug berechnen sowie diese an die Aktuatoren im Fahrzeug weiterleitet, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel vorgesehen, die es dem Fahrer ermöglichen, jederzeit selbst in das Fahrgeschehen eingreifen zu können.

Zudem sind aus dem Stand der Technik Bremssysteme für Fahrzeuge bekannt, welche für eine Ansteuerung durch einen Fahrzeugführer mit einem hydraulischen Durchgriff ausgelegt sind. Dadurch ist bei Ausfall des Bremssystems gewährleistet, dass der Fahrer durch Betätigen des Bremspedals noch ausreichend Bremskraft auf die Räder des Fahrzeugs bringen kann. Diese Auslegung beeinflusst maßgeblich die Topologie heutiger Bremssysteme. So lässt sich beispielsweise die Größe eines Tandemhauptbremszylinders durch die Aufrechterhaltung einer guten Performance in der Rückfallebene begründen. Zudem können die Bremssysteme als sogenannte gekoppelte Bremssysteme oder Hilfskraftbremssysteme ausgeführt werden. Allerdings sind auch diese Systeme so realisiert, dass als Rückfallebene nach wie vor ein hydraulischer Durchgriff durch den Fahrer gegeben ist. Hilfskraftbremsanalagen sind für hochautomatisierte oder autonome Fahrzeuge ungeeignet, da dort während einer autonomen Fahrfunktion kein Fahrer mehr zum Verstärken da ist und das Bremssystem die Bremsenergie komplett selbstständig aufbauen muss.

Aus der DE 10 2013 227 065 A1 sind ein hydraulisches Bremssystem sowie ein Verfahren zum Betreiben eines solchen Bremssystems bekannt. Das hydraulische Bremssystem umfasst einen Hauptbremszylinder, wenigstens einen Radbremszylinder, einen ersten Bremsdruckerzeuger und einen zweiten Bremsdruckerzeuger. Hierbei ist der Hauptbremszylinder über den zweiten Bremsdruckerzeuger mit dem wenigstens einen Radbremszylinder hydraulisch verbindbar. Hierbei können der erste Bremsdruckerzeuger und der zweite Bremsdruckerzeuger zwischen dem Hauptbremszylinder und dem wenigstens einen Radbremszylinder hydraulisch parallel oder in Reihe geschaltet sein.

Aus der US 2016/009267 A ist ein pedalloses elektronisch gesteuertes hydraulisches Bremssystem mit einer redundanten Pumpe bekannt. Ein solches Bremssystem für ein autonomes Fahrzeug umfasst eine Bremsvorrichtung, welche zum Bremsen eines Fahrzeugrads konfiguriert ist. Ein erstes Steuersystem umfasst eine erste Pumpe, welche über einen Hydraulikkreis fluidisch mit der Bremsvorrichtung verbunden ist. Ein zweites Steuersystem umfasst eine zweite Pumpe, welche über den Hydraulikkreis fluidisch mit der Bremsvorrichtung verbunden ist. Die zweite Pumpe ist strömungstechnisch parallel zur ersten Pumpe geschaltet. Eine Steuervorrichtung steht in Kommunikationsverbindung mit dem ersten und dem zweiten Steuersystem. Die Steuervorrichtung ist konfiguriert, um einen Fehler in dem ersten Steuersystem zu erfassen und die zweite Pumpe zu aktivieren, um den Hydraulikkreis in Reaktion auf den Fehler im ersten Steuersystem unter Druck zu setzen.

Weiterhin ist aus dem Stand der Technik die DE 10 2013 224 783 A1 bekannt. Diese Schrift betrifft ein Bremssystem für ein Kraftfahrzeug mit mindestens zwei Achsen, wobei die Räder einer Antriebsachse mit einem elektrischen Antrieb verbunden sind, der mindestens eine als Motor oder Generator betreibbare elektrisehe Maschine aufweist, welches einen ersten hydraulischen Bremskreis mit mindestens einer Radbremse, insbesondere zwei Radbremsen, einen vom Fahrer über ein Bremspedal betätigbaren Hauptbremszylinder, der mit den Radbremsen des ersten Bremskreises verbunden ist, einen Bremsbetätigungssensor, und einen zweiten hydraulischen Bremskreis mit mindestens einer Radbremse, insbesondere zwei Radbremsen, umfasst. Hierbei ist der zweite Bremskreis nur mit einer autonomen Druckquelle hydraulisch verbunden, wobei die Radbremsen des zweiten Bremskreises der Antriebsachse zugeordnet sind und die Radbremsen des ersten Bremskreises einer anderen Achse zugeordnet sind. Ferner betrifft die Schrift ein Verfahren zur Steuerung eines Bremssystems.

### Offenbarung der Erfindung

Das hydraulische Bremssystem für ein Fahrzeug mit mindestens zwei Achsen, insbesondere für ein hochautomatisiertes oder autonomes Fahrzeug, mit den Merkmalen des unabhängigen Patentanspruchs 1 hat den Vorteil, dass eine einfache, robuste und kostengünstige Bremssystemarchitektur ohne mechanischen und/oder hydraulischen Durchgriff über den Fahrer zur Verfügung gestellt wird, welche auch im Fehlerfall durch drei Druckerzeuger und ein geeignetes Redundanzkonzept eine ausreichende Bremsperformance ermöglicht.

Weiterhin ermöglichen Ausführungsformen des hydraulische Bremssystem für ein Fahrzeug ein erleichtertes Montagekonzept mit Vormontage der beiden Subbremssysteme an den korrespondierenden Fahrzeugachsen. Von den drei Druckerzeugern sind zwei in ein redundantes Subbremssystem in paralleler Verschaltung an einer ersten Achse, vorzugsweise an einer Vorderachse implementiert. Der dritte Druckerzeuger ist in einem weiteren Subbremssystem an einer zweiten Achse, vorzugweise an einer Hinterachse implementiert. Zwischen den Subbremssystemen an den verschiedenen Achsen besteht keine hydraulische Verbindung. Als Druckerzeuger bzw. Volumenerzeuger können beispielsweise Plungersysteme, Pumpensysteme oder Pumpensysteme mit Druckspeichern eingesetzt werden. Auch elektrohydraulische Aktuatoren, wo eine elektrisch leitende Flüssigkeit durch Anlegen von Strom und einem Magnetfeld in Bewegung gesetzt werden, sind denkbar. Hierbei werden die Druckerzeuger jeweils von einem separaten Steuergerät angesteuert, wobei die Druckerzeuger des ersten Subbremssystems an unterschiedliche Bordnetze angeschlossen sind. Der dritte Druckerzeuger des zweiten Subbremssystems ist an einem weiteren Bordnetz bzw. an einem der Bordnetze angeschlossen, an welchem einer der Druckerzeuger des ersten Subbremssystems angeschlossen ist. Das Bremssystem ist als reines Brake-by-Wire System ausgestaltet, das bedeutet, dass kein mechanischer und/oder hydraulischer Durchgriff des Fahrers möglich ist und sowohl autonome Bremsanforderungen als auch Anforderungen des Fahrers rein elektrisch über einen Datenbus an das Bremssystem kommuniziert werden. Die Zweikreisigkeit des Gesamtbremssystems ist durch die vorgeschlagene Architektur mit separaten Subbremssystemen an verschiedenen Achsen gegeben.

Als weiteren Vorteil sind Ausführungsformen des hydraulischen Bremssystems durch die parallele hydraulische Verschaltung der Druckerzeuger des ersten Subbremssystems noch funktionsfähig, wenn eine mechanische Unterbrechung in einem der Saugpfade vorliegt, da jeder Druckerzeuger einen separaten Saugpfad aufweist. Zudem ermöglicht die parallele Anordnung der Druckerzeuger eine einfachere Erweiterung auf mehr als zwei parallel geschaltete Druckerzeuger, da Drosselverluste im Gegensatz zu einer seriellen Anordnung der Druckerzeuger minimiert werden können. Bei einer seriellen Verschaltung der Druckerzeuger steigen die Drosselverluste durch die Hintereinanderschaltung der Druckerzeuger an. Außerdem können bei parallel angeordneten Druckerzeugern die Volumenströme addiert werden, so dass zur Erfüllung der Vollsystemperformance als Art heiße Redundanz die Druckerzeuger bezüglich Förderleistung kleiner dimensioniert werden können, um gemeinsam die Anforderung zu erfüllen.

Ausführungsformen der vorliegenden Erfindung stellen ein hydraulisches Bremssystem für ein Fahrzeug mit mindestens zwei Achsen, insbesondere für ein hochautomatisiertes oder autonomes Fahrzeug, mit mindestens zwei voneinander hydraulisch getrennten Subbremssystemen zur Verfügung. Hierbei umfasst ein erstes Subbremssystem einen ersten Bremskreis, ein Hauptsystem, welches eine erste Energieversorgung und eine erste Auswerte- und Steuereinheit aufweist, und ein Sekundärsystem, welches eine von der ersten Energieversorgung unabhängige zweite Energieversorgung und eine zweite Auswerte- und Steuereinheit aufweist, zur redundanten Druckerzeugung im ersten Bremskreis. Das erste Subbremssystem ist einer ersten Achse mit mindestens zwei Radbremsen zugeordnet. Der erste Bremskreis umfasst einen dem Hauptsystem zugeordneten ersten Druckerzeuger, einen dem Sekundärsystem zugeordneten zweiten Druckerzeuger, welche zwischen einem ersten Fluidbehälter und den mindestens zwei Radbremsen der ersten Achse hydraulisch parallel geschaltet sind, und eine erste Modulationseinheit zur hydraulischen Verbindung der Druckerzeuger mit den mindestens zwei Radbremsen und zur individuellen Bremsdruckmodulation in den mindestens zwei Radbremsen. Ein zweites Subbremssystem umfasst einen zweiten Bremskreis und ein Nebensystem, welches eine dritte Energieversorgung und eine dritte Auswerte- und Steuereinheit aufweist, zur Druckerzeugung im zweiten Bremskreis. Das zweite Subbremssystem ist einer zweiten Achse mit mindestens zwei Radbremsen zugeordnet. Der zweite Bremskreis umfasst einen dem Nebensystem zugeordneten dritten Druckerzeuger, welcher zwischen einem zweiten Fluidbehälter und den mindestens zwei Radbremsen der zweiten Achse angeordnet ist, und eine zweite Modulationseinheit zur hydraulischen Verbindung des Druckerzeugers mit den mindestens zwei Radbremsen und zur individuellen Bremsdruckmodulation in den mindestens zwei Radbremsen.

Durch die individuelle Bremsdruckmodulation in den einzelnen Radbremsen können in vorteilhafter Weise verschiedene Regelfunktionen, wie beispielsweise eine Blockierschutzregelung ABS, eine Antriebsschlupfregelung ASR, eine Fahrdynamikregelung FDR bzw. ESP zur Längs- und Querstabilisierung des Fahrzeugs umgesetzt werden. Da diese Regelfunktionen an sich bekannt sind wird hier nicht näher auf diese eingegangen.

Ausführungsformen des Bremssystems ermöglichen und/oder unterstützen neue Fertigungskonzepte bei den Fahrzeugherstellern. Da keine hydraulischen Leitungen zwischen den Achsen durch das Fahrzeug verlaufen, ermöglichen die hydraulisch getrennten Subbremssysteme eine Bremssystemmontage schon auf dem korrespondierenden Achsmodul. Damit muss die Bremssystemmontage und die Bremssysteminbetriebnahme nicht mehr auf der besonders zeitkritischen Hauptlinie erfolgen, sondern kann auf die eine nebengeordnete "Subassembly" Linie verlegt werden. Alternativ kann auch vom Zulieferer ein komplettes Achsmodul mit befülltem Bremssystem an das Fertigungsband des Fahrzeugherstellers geliefert werden, welches dann nur noch mechanisch ins Fahrzeug integriert und elektrisch verbunden werden muss. Zudem ergeben sich Einbau- und/oder Packagingvorteile, da die Subbremssysteme kleiner und/oder leichter als ein zentrales Bremssystem sind und so leichter in den gegebenen Bauraum integriert werden können. Durch den Entfall der Bremsleitungen von vorne nach hinten wird weiterhin Bauraum frei und bei batterieelektrischen Fahrzeugen mit Batteriepack(s) wird die Montage des Batteriepacks vereinfacht. Damit ist weiterhin neben den genannten Fertigungsvorteilen auch ein einfacherer Batteriewechsel entweder im Service oder als Wechselbatterie (Batterietauschen anstatt Laden) möglich. Des Weiteren ergibt sich durch reduzierte Leitungslängen, geringeres Kreisvolumen je Subbremssystem und separate Befüllung der beiden Subbremssysteme abseits der Hauptfertigungslinie des Fahrzeuges eine Optimierung der Zeit zur hydraulischen Befüllung des Bremssystems. Außerdem das Risiko hydraulische Leitungen im Unterboden bzw. zwischen Vorderachse und Hinterachse während der Fertigung, im Fahrbetrieb oder Service zu beschädigen reduziert, so dass auch Ausfallwahrscheinlichkeiten leicht reduziert werden können.

Durch die dreifache Druckerzeugerredundanz kann nach einem Erstfehler, der zum Verlust eines Druckerzeugers oder eines Subbremssystems führt, noch eine längere autonome Weiterfahrt ermöglicht werden ("complete the mission"), da weiterhin noch Redundanz vorhanden ist.

Ausführungsformen der Erfindung weisen weniger Komponenten als bekannte Bremssysteme auf, da weniger Ventile, kürzere Bremsleitungen, kein Pedalwegsimulator, kein Mechanismus, um den Fahrerdruck zu erzeugen, zu verstärken und weiterzuleiten erforderlich sind, so dass geringere Bremssystemkosten entstehen. Zudem ergeben sich geringere Systemkosten, da an den Radbremsen nur ein hydraulischer Anschluss vorhanden ist und keine Alternativlösungen mit zwei Anschlüssen im Bremssattel erforderlich sind, die auf unterschiedliche Kolben wirken. Des Weiteren weisen die Fluidbehälter nur einen hydraulischen Anschluss pro Bremskreis auf und Alternativlösungen mit mehreren Anschlüssen sind überflüssig.

Außerdem ergeben sich geringere Integrationskosten beim Fahrzeughersteller, da die Ausführungsformen der Erfindung aufgrund der elektrischen Ansteuerung ohne mechanischen und/oder hydraulischen Durchgriff über den Fahrer einen einfachen Einbau, insbesondere für Rechts- und Linkslenker, ermöglichen und Einbauraum an der Spritzwand zwischen Motorraum und Fahrzeuginnenraum freigeben. Da keiner der Bremssystemaktuatoren an der Spritzwand montiert sein muss, können sich auch NVH-Vorteile (NVH: Noise, Vibration, Harshness "Geräusch, Vibration, Rauigkeit") ergeben. Aufgrund der kleineren Anzahl von Komponenten ergibt sich zudem ein geringeres Gewicht und Volumen im Vergleich zu bekannten Bremssystemen.

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Zur Erfassung der Sensorsignale sind Sensoreinheiten vorgesehen, unter welchen vorliegend Baugruppen verstanden werden, welche mindestens ein Sensorelement umfassen, welches eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schallwellen und/oder elektromagnetischen Wellen und/oder über ein Magnetfeld bzw. die Änderung eines Magnetfelds und/oder das Empfangen von Satellitensignalen beispielsweise eines GPS-Signals erfolgen. Eine solche Sensoreinheit kann beispielsweise Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden. Basierend auf den beschleunigungsrelevanten Informationen und/oder daraus ermittelten Größen können beispielsweise eine Fahrzeugbewegung und eine Fahrzeuglage im dreidimensionalen Raum geschätzt werden und zur Unfallerkennung ausgewertet werden.

Zur Positionsbestimmung des Fahrzeugs können beispielsweise globale Navigationssatellitensysteme GNSS (GNSS: Global Navigation Satellite System) eingesetzt werden. Hierbei wird GNSS als Sammelbegriff für die Verwendung bestehender und künftiger globaler Satellitensysteme wie NAVSTAR GPS (Global Positioning System) der Vereinigten Staaten von Amerika, GLONASS (Global Navigation Satellite System) der Russischen Föderation, Galileo der Europäischen Union, Beidou der Volksrepublik China usw. eingesetzt.

Unter einem hochautomatisierten oder autonomen Fahrzeug, wird ein Fahrzeug verstanden, welches mindestens eine hochautomatisierte oder autonome Fahrfunktion aufweist, welche zumindest teilweise eine tatsächliche Fahraufgabe übernehmen kann. Über diese mindestens eine hochautomatisierte oder autonome Fahrfunktion erkennt das Fahrzeug beispielsweise den Straßenverlauf, andere Verkehrsteilnehmer oder Hindernisse selbständig und berechnet die entsprechenden Ansteuerbefehle, welche an die Aktuatoren im Fahrzeug weiterleitet werden, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel, beispielsweise in Form von elektrischen oder elektronischen Betätigungselementen, vorgesehen, die es dem Fahrer ermöglichen, jederzeit selbst in das Fahrgeschehen eingreifen zu können. Der vom Fahrer mittels der Betätigungselemente erzeugte Bremswunsch wird dann über elektrische Signale an das Hauptsystem und/oder das Sekundärsystem weitergeleitet. Ein mechanischer und/oder hydraulischen Durchgriff durch den Fahrer ist jedoch nicht vorhanden.

Die mindestens eine Fahrfunktion wertet zur Trajektorienplanung von internen Sensoreinheiten erfasste Fahrzeugdaten wie ABS-Eingriffe, Lenkwinkel, Position, Richtung, Geschwindigkeit, Beschleunigung usw. und/oder Fahrzeugumfelddaten aus, welche beispielsweise über Kamera-, Radar-, Lidar- und/oder Ultraschallsensoreinheiten erfasst werden, und steuert die Auswerte- und Steuereinheiten des Hauptsystems und des Sekundärsystems entsprechend an, um einen gewünschten Bremsdruck zu erzeugen und/oder Stabilisierungsvorgänge in Längs- und/oder Querrichtung durch individuelle Bremsdruckmodulation in den Radbremsen zu realisieren.

Durch die in den abhängigen Ansprüchen aufgeführten Maßnahmen und Weiterbildungen sind vorteilhafte Verbesserungen des im unabhängigen Patentanspruch 1 angegebenen hydraulischen Bremssystems für ein Fahrzeug mit mindestens zwei Achsen, insbesondere für ein hochautomatisiertes oder autonomes Fahrzeug möglich.

Besonders vorteilhaft ist, dass die erste Modulationseinheit und/oder die zweite Modulationseinheit für jede der zugeordneten Radbremsen zur individuellen Bremsdruckmodulation jeweils ein Einlassventil und jeweils ein Auslassventil umfassen kann. Die Einlassventile können beispielsweise als regelbare stromlos offene Magnetventile ausgeführt werden. Die Auslassventile können beispielsweise als elektromagnetische stromlos geschlossene Schaltventile ausgeführt werden. Durch diese Ausführung der Modulationseinheiten ist es in vorteilhafter Weise möglich, Komponenten aus bereits bekannten ESP-Systemen einzusetzen und über bereits existierenden Skaleneffekt (ESP wird millionenfach gebaut) sehr niedrige Gesamtsystemkosten zu erzielen.

In vorteilhafter Ausgestaltung des Bremssystems können das erste Subbremssystem und/oder das zweite Subbremssystem als hydraulisch offene Systeme ausgeführt werden, wobei ein erster Druckablasspfad im ersten Subbremssystem die Auslassventile der zugeordneten Radbremsen der ersten Achse mit dem ersten Fluidbehälter verbinden kann. Ein zweiter Druckablasspfad im zweiten Subbremssystem kann die Auslassventile der zugeordneten Radbremsen der zweiten Achse mit dem zweiten Fluidbehälter verbinden. Unter einem hydraulisch offenen Bremssystem, wird ein Bremssystem verstanden, bei welchem während einer individuellen Bremsdruckmodulation abgelassenes Bremsfluid aus den Radbremsen über einen korrespondierenden Druckablasspfad zu einem korrespondierenden Fluidbehälter zurückgeführt werden kann. Das offene System zeichnet sich zudem dadurch aus, dass während einer radindividuellen Druckmodulation oder Druckreduktion Bremsflüssigkeitsvolumen über die Auslassventile aus dem Druckkreis direkt wieder in den korrespondierenden Fluidspeicher auf Atmosphärendruck abgelassen werden kann. Dies hat in einem fahrerentkoppelten System den Vorteil, dass die Komponenten Niederdruckspeicher und Schaltventil für den Pumpenansaugpfad nicht benötigt werden und weiterhin auch ein beliebig großer Druckabbau dargestellt werden kann, da nie eine Speicherkammer volllaufen kann.

In weiterer vorteilhafter Ausgestaltung des Bremssystems können die Druckerzeuger jeweils als Plungersystem oder als Pumpensystem oder als Pumpensystem mit Druckspeicher oder als elektrohydraulische Aktuatoren ausgeführt werden können. So können beispielsweise bei einer besonders vorteilhaften Ausführungsform des Bremssystems der erste Druckerzeuger des Hauptsystems als erstes Plungersystem und der zweiter Druckerzeuger als zweites Plungersystem oder als Pumpensystem und der dritte Druckerzeuger des Nebensystems als drittes Plungersystem ausgeführt werden. Durch die Ausführung des ersten Druckerzeugers und des dritten Druckerzeugers als Plungersysteme ergibt sich eine gute NVH-Performance im Gesamtsystem und ein einfacheres und/oder genaueres Monitoring und eine verbesserte Regelung. Dies ermöglicht, dass sowohl Lage als auch Volumen- und Druckaufbauinformationen im Hauptsystem und im Nebensystem in Vergleich zu anderen Konzepten (Pumpensystem) einfacher und insbesondere genauer erfasst werden können. Durch die Ausführung des zweiten Druckerzeugers als Plungersystem ergibt sich sowohl im Normalbetrieb als auch bei Ausfall des Hauptsystems eine sehr gute NVH-Performance. Durch die Ausführung des zweiten Druckerzeugers als Pumpensystem ergeben sich noch geringere Kosten, Bauraum und Gewicht im Vergleich zu anderen Konzepten (Plungersystem). Alternativ im ersten Subbremssystem ein Pumpensystem als erster Druckerzeuger eingesetzt werden. Als weitere Alternative kann das erste Subbremssystem als geschlossenes System ausgeführt werden, welches als zweiten Druckerzeuger ein Pumpensystem einsetzt.

In weiterer vorteilhafter Ausgestaltung des Bremssystems kann der erste Bremskreis für den als Pumpensystem ausgeführten zweiten Druckerzeuger ein Druckhalte- und Druckregelventil aufweisen, welches dem Sekundärsystem zugeordnet ist und von der zweiten Auswerte- und Steuereinheit angesteuert und von der zweiten Energieversorgung mit Energie versorgt wird.

In weiterer vorteilhafter Ausgestaltung des Bremssystems kann der als erstes Plungersystem ausgeführte erste Druckerzeuger über ein erstes Magnetventil, welches ein Nachladen von Bremsfluid aus dem ersten Fluidbehälter ermöglicht, hydraulisch mit der ersten und zweiten Radbremse verbunden werden, und der als Pumpensystem ausgeführte zweite Druckerzeuger kann direkt mit der ersten und zweiten Radbremse verbunden werden. Aufgrund der offenen Architektur ist das erste Plungersystem in der Lage Fluid nachzuladen bzw. nachzuschnüffeln. Das erste Magnetventil kann beispielsweise ein erstes Absperrventil sein, welches dem Sekundärsystem zugeordnet ist und von der zweiten Auswerte- und Steuereinheit angesteuert und von der zweiten Energieversorgung mit Energie versorgt werden kann. Alternativ kann das erste Magnetventil das Druckhalteund Druckregelventil des als Pumpensystem ausgeführten zweiten Druckerzeugers sein. Hierbei trennt das eingesetzte Magnetventil das Plungersystem von den Radbremsen, so dass das Plungersystem während des Nachladevorgangs kein Bremsfluid aus den Radbremsen ansaugen kann.

In weiterer vorteilhafter Ausgestaltung des Bremssystems kann der erste Druckerzeuger über ein erstes Absperrventil mit der ersten und zweiten Radbremse verbunden werden. Der zweite Druckerzeuger kann über ein zweites Absperrventil mit der ersten und zweiten Radbremse verbunden werden. Hierbei können die Absperrventile dem Hauptsystem zugeordnet und von der ersten Energieversorgung mit Energie versorgt und von der ersten Auswerte- und Steuereinheit so ansteuerbar werden, dass bei Aktivierung von einem der beiden Druckerzeuger ein Hydraulikfluid nicht durch den anderen der beiden Druckerzeuger geleitet werden kann. Das bedeutet, dass eines der beiden Absperrventile geöffnet ist, und den korrespondierenden Druckerzeuger von den Radbremsen trennt. Gleichzeitig ist das andere der beiden Absperrventile geschlossen und verbindet den korrespondierenden Druckerzeuger mit den Radbremsen. Alternativ können die Absperrventile dem Sekundärsystem zugeordnet und von der zweiten Energieversorgung mit Energie versorgt und von der zweiten Auswerteund Steuereinheit so angesteuert werden, dass bei Aktivierung von einem der beiden Druckerzeuger ein Hydraulikfluid nicht durch den anderen der beiden Druckerzeuger geleitet wird. Hierbei kann das erste Absperrventil beispielsweise als stromlos geschlossenes Magnetventil ausgeführt werden, und das zweite Absperrventil kann beispielsweiseweise als stromlos offenes Absperrventil ausgeführt werden. Durch die stromlos geschlossene Ausführung des ersten Absperrventils ist der erste Druckerzeuger hydraulisch mit den Radbremsen verbunden. Durch die stromlos offene Ausführung des zweiten Absperrventils ist der zweite Druckerzeuger hydraulisch von den Radbremsen getrennt. Daher ist im Normalbetrieb, in welchem der erste Druckerzeuger den Druck für die Radbremsen erzeugt, keine Ansteuerung der Absperrventile erforderlich, um den ersten Druckerzeuger hydraulisch mit den Radbremsen zu verbinden und den zweiten Druckerzeuger hydraulisch von den Radbremsen zu trennen. Zudem sind die Radbremsen über den ersten Druckerzeuger mit dem ersten Fluidbehälter verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Hauptsystem. Alternativ kann das erste Absperrventil beispielsweise als stromlos offenes Magnetventil ausgeführt werden, und das zweite Absperrventil kann als stromlos geschlossenes Magnetventile ausgeführt werden. Durch die stromlos offene Ausführung des ersten Absperrventils ist der erste Druckerzeuger hydraulisch von den Radbremsen getrennt. Durch die stromlos geschlossene Ausführung des zweiten Absperrventils ist der zweite Druckerzeuger hydraulisch mit den Radbremsen verbunden. Daher ist im Normalbetrieb, in welchem der erste Druckerzeuger den Druck für die Radbremsen erzeugt, eine Ansteuerung der Absperrventile erforderlich, um den ersten Druckerzeuger hydraulisch mit den Radbremsen zu verbinden und den zweiten Druckerzeuger hydraulisch von den Radbremsen zu trennen. Zudem sind die Radbremsen über den zweiten Druckerzeuger mit dem ersten Fluidbehälter verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Sekundärsystem.

In weiterer vorteilhafter Ausgestaltung des Bremssystems kann der zweite Bremskreis für den als drittes Plungersystem ausgeführten Druckerzeuger ein Absperrventil aufweisen, welches ein Nachladen von Bremsfluid aus dem zweiten Fluidbehälter ermöglicht.

In weiterer vorteilhafter Ausgestaltung des Bremssystems kann der erste Bremskreis für das erste Plungersystem eine Saugleitung mit Rückschlagventil aufweisen, welche das erste Plungersystem zusätzlich mit dem ersten Fluidbehälter hydraulisch verbinden kann. Zudem kann der zweite Bremskreis für das dritte Plungersystem eine Saugleitung mit Rückschlagventil aufweisen, welche das dritte Plungersystem zusätzlich mit dem zweiten Fluidbehälter hydraulisch verbinden kann. Dadurch kann der Nachladevorgang der Plungersysteme insbesondere bei Tieftemperaturen schneller durchgeführt werden.

In weiterer vorteilhafter Ausgestaltung des Bremssystems können die Auswerteund Steuereinheiten der Subbremssysteme über ein Bussystem miteinander kommunizieren. Hierbei können die erste und zweite Auswerte- und Steuereinheit des ersten Subbremssystems als Master und die dritte Auswerte- und Steuereinheit des zweiten Subbremssystems als Slave implementiert werden. Das bedeutet, dass Fahrzeugfunktionen, wie beispielsweise ein Fahrzeugregler auf die erster und zweite Auswerte- und Steuereinheit des ersten Subbremssystem berechnet und abgestimmt werden und Stellanforderungen vom ersten Subbremssystem an die dritte Auswerte- und Steuereinheit des zweiten Subbremssystems übertragen werden.

In weiterer vorteilhafter Ausgestaltung des Bremssystems können Komponenten der ersten Modulationseinheit zur individuellen Bremsdruckmodulation dem Hauptsystem zugeordnet werden, so dass diese Komponenten der ersten Modulationseinheit und der erste Druckerzeuger von der ersten Auswerte- und Steuereinheit angesteuert und von der ersten Energieversorgung mit Energie versorgt werden. Analog können Komponenten der zweiten Modulationseinheit zur individuellen Bremsdruckmodulation dem Nebensystem zugeordnet werden, so dass diese Komponenten der zweiten Modulationseinheit und der dritte Druckerzeuger von der dritten Auswerte- und Steuereinheit angesteuert und von der dritten Energieversorgung mit Energie versorgt werden können. Hierbei kann die erste Energieversorgung des Hauptsystems oder die zweite Energieversorgung des Sekundärsystems als dritte Energieversorgung des Nebensystems eingesetzt werden. Alternativ kann die dritte Energieversorgung als separate Energieversorgung ausgeführt werden, welche unabhängig von der ersten und zweiten Energieversorgung ist.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels eines erfindungsgemäßen hydraulischen Bremssystem für ein Fahrzeug mit mindestens zwei Achsen, insbesondere für ein hochautomatisiertes oder autonomes Fahrzeug.
Fig. 2 zeigt ein schematisches Blockdiagramm eines Ausführungsbeispiels eines ersten Subbremssystems des erfindungsgemäßen Bremssystems aus Fig. 1.
Fig. 3 zeigt ein schematisches Blockdiagramm eines Ausführungsbeispiels eines zweiten Subbremssystems des erfindungsgemäßen Bremssystems aus Fig. 1.
Fig. 4 zeigt ein schematisches hydraulisches Schaltbild eines zweiten Bremskreises des zweiten Subbremssystems aus Fig. 3.
Fig. 5 zeigt ein schematisches hydraulisches Schaltbild eines ersten Ausführungsbeispiels eines ersten Bremskreises des ersten Subbremssystems aus Fig. 2.
Fig. 6 zeigt ein schematisches hydraulisches Schaltbild eines zweiten Ausführungsbeispiels des ersten Bremskreises des ersten Subbremssystems aus Fig. 2.
Fig. 7 zeigt ein schematisches hydraulisches Schaltbild eines dritten Ausführungsbeispiels des ersten Bremskreises des ersten Subbremssystems aus Fig. 2.
Fig. 8 zeigt ein schematisches hydraulisches Schaltbild eines vierten Ausführungsbeispiels des ersten Bremskreises des ersten Subbremssystems aus Fig. 2.
Fig. 9 zeigt ein schematisches hydraulisches Schaltbild eines vierten Ausführungsbeispiels des ersten Bremskreises des ersten Subbremssystems aus Fig. 2.

### Ausführungsformen der Erfindung

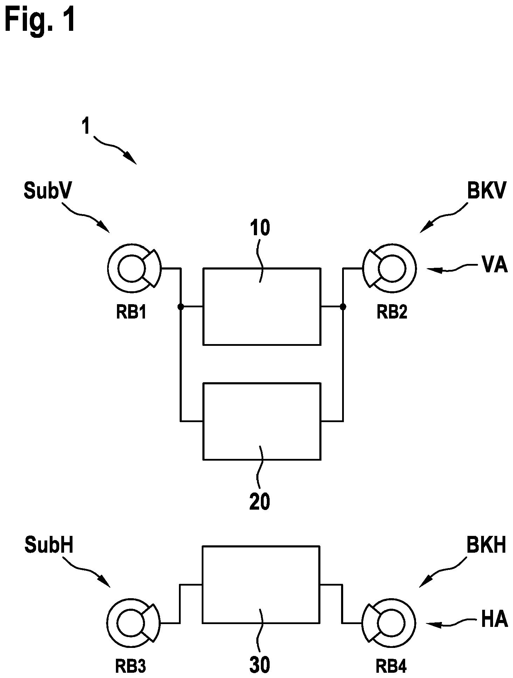

Wie aus Fig. 1 bis 3 ersichtlich ist, umfasst das dargestellten Ausführungsbeispiel eines erfindungsgemäßen hydraulischen Bremssystem 1 für ein Fahrzeug mit mindestens zwei Achsen VA, HA, insbesondere für ein hochautomatisiertes oder autonomes Fahrzeug, mindestens zwei voneinander hydraulisch getrennte Subbremssysteme SubV, SubH. Hierbei umfasst ein erstes Subbremssystem SubV einen ersten Bremskreis BKV, ein Hauptsystem 10, welches eine erste Energieversorgung EV1 und eine erste Auswerte- und Steuereinheit 14 aufweist, und ein Sekundärsystem 20, welches eine von der ersten Energieversorgung EV1 unabhängige zweite Energieversorgung EV2 und eine zweite Auswerte- und Steuereinheit 24 aufweist, zur redundanten Druckerzeugung im ersten Bremskreis BKV. Das erste Subbremssystem SubV ist einer ersten Achse VA, hier einer Vorderachse des Fahrzeugs, mit mindestens zwei Radbremsen RB1, RB2 zugeordnet. Der erste Bremskreis BVK umfasst einen dem Hauptsystem 10 zugeordneten ersten Druckerzeuger 12, einen dem Sekundärsystem 20 zugeordneten zweiten Druckerzeuger 22, welche zwischen einem ersten Fluidbehälter 7V und den mindestens zwei Radbremsen RB1, RB2 der ersten Achse VA hydraulisch parallel geschaltet sind, und eine erste Modulationseinheit 16V zur hydraulischen Verbindung der Druckerzeuger 12, 22 mit den mindestens zwei Radbremsen RB1, RB2 und zur individuellen Bremsdruckmodulation in den mindestens zwei Radbremsen RB1, RB2. Ein zweites Subbremssystem SubH umfasst einen zweiten Bremskreis BKH und ein Nebensystem 30, welches eine dritte Energieversorgung EV3 und eine dritte Auswerte- und Steuereinheit 34 aufweist, zur Druckerzeugung im zweiten Bremskreis BKH. Das zweite Subbremssystem SubH ist einer zweiten Achse HA, hier der Hinterachse des Fahrzeugs, mit mindestens zwei Radbremsen RB3, RB4 zugeordnet. Der zweite Bremskreis BKH umfasst einen dem Nebensystem 30 zugeordneten dritten Druckerzeuger 32, welcher zwischen einem zweiten Fluidbehälter 7H und den mindestens zwei Radbremsen RB3, RB4 der zweiten Achse HA angeordnet ist, und eine zweite Modulationseinheit 16H zur hydraulischen Verbindung des Druckerzeugers 32 mit den mindestens zwei Radbremsen RB3, RB4 und zur individuellen Bremsdruckmodulation in den mindestens zwei Radbremsen RB3, RB4.

Die Auswerte- und Steuereinheiten 14, 24, 34 der beiden Subbremssysteme SubV, SubH kommunizieren über ein nicht dargestelltes Bussystem miteinander, wobei die erste und zweite Auswerte- und Steuereinheit 14, 24 des ersten Subbremssystems SubV als Master und die dritte Auswerte- und Steuereinheit 34 des zweiten Subbremssystems SubH als Slave implementiert sind. Im dargestellten Ausführungsbeispiel ist die dritte Energieversorgung EV3 als separate von der ersten und zweiten Energieversorgung EV1, EV2 unabhängige Einheit ausgeführt. Bei alternativen nicht dargestellten Ausführungsbeispielen kann die erste Energieversorgung EV1 des Hauptsystems 10 oder die zweite Energieversorgung EV2 des Sekundärsystems 20 als dritte Energieversorgung E3 des Nebensystems 30 eingesetzt werden.

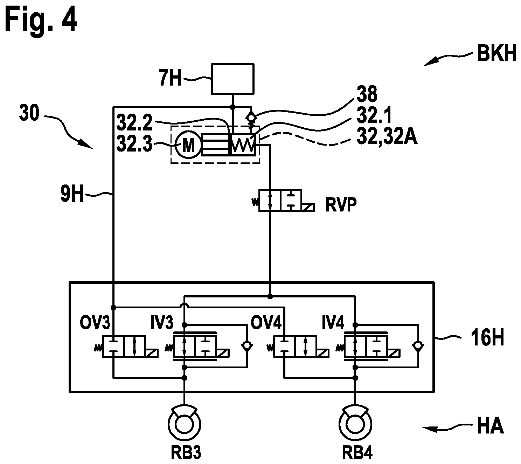

Wie aus Fig. 4 weiter ersichtlich ist, ist der dritte Druckerzeuger 32 des Nebensystems 30 im dargestellten Ausführungsbeispiel des zweiten Bremskreises BKH als Plungersystem 32A ausgeführt. Das Plungersystem 32A umfasst eine Zylinder-Kolben-Einheit, welche eine Fluidkammer 32.1 und einen Kolben 32.2 umfasst. Hierbei wird der Kolben 32.2 von einem Antrieb 32.3, welcher hier als Elektromotor ausgeführt ist, gegen die Kraft einer nicht näher bezeichneten Rückstellfeder bewegt, um einen gewünschten Druck im zweiten Bremskreis BKH einzustellen. Im dargestellten Ausführungsbeispiel ist die Fluidkammer 32.1 des Plungersystems 32A im stromlosen Zustand offen.

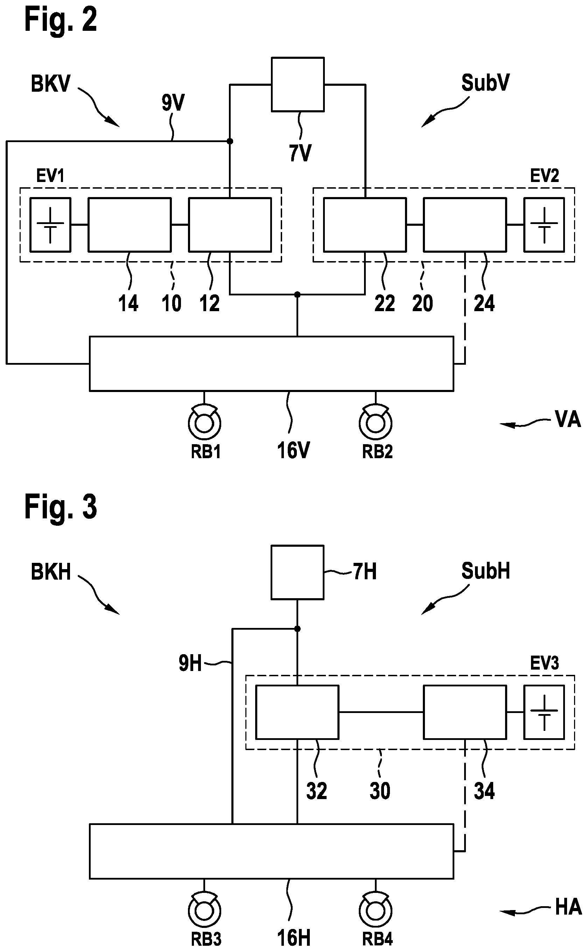

Wie aus Fig. 4 weiter ersichtlich ist, umfasst die zweite Modulationseinheit 16H im dargestellten Ausführungsbeispiel des zweiten Bremskreises BKH für jede der zugeordneten Radbremsen RB3, RB4 zur individuellen Bremsdruckmodulation jeweils ein Einlassventil IV3, IV4 und jeweils ein Auslassventil OV3, OV4. Wie aus Fig. 3 und 4 weiter ersichtlich ist, ist das zweite Subbremssystem SubH als hydraulisch offenes System ausgeführt, und ein zweiter Druckablasspfad 9H verbindet im zweiten Subbremssystem SubH die Auslassventile OV3, OV4 der zugeordneten Radbremsen RB3, RB4 der zweiten Achse HA mit dem zweiten Fluidbehälter 7H.

Wie aus Fig. 4 weiter ersichtlich ist, weist der zweite Bremskreis BKH für das zweite Plungersystem 32A ein Absperrventil RVP auf, welches ein Nachladen von Bremsfluid aus dem zweiten Fluidbehälter 7H ermöglicht. Zum Nachladen der Fluidkammer 32.1 des dritten Plungersystems 32A wird das Absperrventil RVP geöffnet, damit das Plungersystem 32A kein Fluid aus den Radbremsen RB3, RB4 absaugen kann. Zudem weist der zweite Bremskreis BKH für das dritte Plungersystem 32A zusätzlich zur direkten Verbindung mit dem zweiten Fluidbehälter 7H eine Saugleitung mit Rückschlagventil 38 auf, welche das dritte Plungersystem 32A zusätzlich mit dem zweiten Fluidbehälter 7H hydraulisch verbindet. Komponenten der zweiten Modulationseinheit 16H sind zur individuellen Bremsdruckmodulation dem Nebensystem 30 zugeordnet, so dass diese Komponenten der zweiten Modulationseinheit 16H, das Absperrventil RVP und der dritte Druckerzeuger 32 von der dritten Auswerte- und Steuereinheit 34 angesteuert und von der dritten Energieversorgung EV3 mit Energie versorgt werden.

Wie aus Fig. 2 und 5 bis 9 weiter ersichtlich ist, ist der erste Druckerzeuger 12 des Hauptsystems 10 als erstes Plungersystem 12A und der zweiter Druckerzeuger 22 als zweites Plungersystem 22A oder als Pumpensystem 22B ausgeführt. Die Plungersysteme 12A, 22A umfassen jeweils eine Zylinder-Kolben-Einheit, welche eine Fluidkammer 12.1, 22.1 und einen Kolben 12.2, 22.2 umfasst. Hierbei werden die Kolben 12.2, 22.2 jeweils von einem Antrieb 12.3, 22.3, welche hier als Elektromotoren ausgeführt sind, gegen die Kraft von nicht näher bezeichneten Rückstellfedern bewegt, um einen gewünschten Druck im ersten Bremskreis BKV, BKVA, BKVB, BKVC, BKVD, BKVE einzustellen. Im dargestellten Ausführungsbeispiel sind die Fluidkammern 12.1, 22.2 der Plungersysteme 12A, 22A im stromlosen Zustand offen. Das Pumpensystem 22B umfasst eine Pumpe 22.1, welche von einem Antrieb 22.3, hier einem Elektromotor, angetrieben wird, um einen gewünschten Druck im ersten Bremskreis BKV, BKVA, BKVB einzustellen.

Wie aus Fig. 2 und 5 bis 9 weiter ersichtlich ist, umfasst die erste Modulationseinheit 16V in den dargestellten Ausführungsbeispielen des ersten Bremskreises BKV, BKVA, BKVB, BKVC, BKVD, BKVE für jede der zugeordneten Radbremsen RB1, RB2 zur individuellen Bremsdruckmodulation jeweils ein Einlassventil IV1, IV2 und jeweils ein Auslassventil OV1, OV3. Komponenten der ersten Modulationseinheit 16V sind zur individuellen Bremsdruckmodulation dem Hauptsystem 10, 10A, 10B, 10C, 10D, 10E zugeordnet, so dass diese Komponenten der ersten Modulationseinheit 16V und der erste Druckerzeuger 12 von der ersten Auswerte- und Steuereinheit 14 angesteuert und von der ersten Energieversorgung EV1 mit Energie versorgt werden. Zudem ist das erste Subbremssystem SubV in den dargestellten Ausführungsbeispielen als hydraulisch offenes System ausgeführt, und ein erster Druckablasspfad 9V verbindet im ersten Subbremssystem SubV die Auslassventile OV1, OV2 der zugeordneten Radbremsen RB1, RB2 der ersten Achse VA mit dem ersten Fluidbehälter 7V.

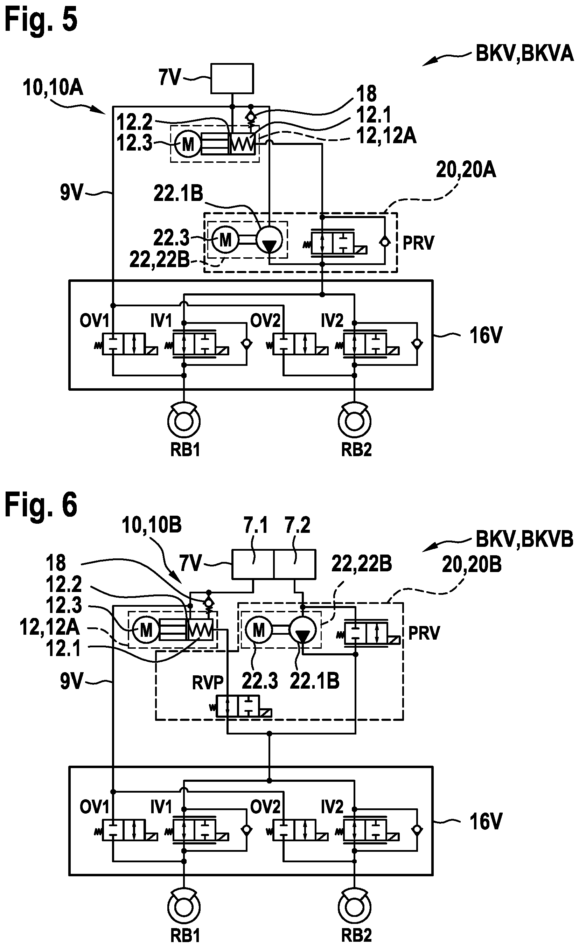

Wie aus Fig. 5 weiter ersichtlich ist, ist im dargestellten ersten Ausführungsbeispiel des ersten Bremskreises BKVA der erste Druckerzeuger 12 als Plungersystem 12A ausgeführt und der zweite Druckerzeuger 22 ist als Pumpensystem 22B ausgeführt. Der erste Bremskreis BKVA umfasst für den als Pumpensystem 22B ausgeführten zweiten Druckerzeuger 22 ein Druckhalte- und Druckregelventil PRV, welches dem Sekundärsystem 20A zugeordnet ist und von der zweiten Auswerte- und Steuereinheit 24 angesteuert und von der zweiten Energieversorgung EV2 mit Energie versorgt wird. Der als Plungersystem 12A ausgeführte erste Druckerzeuger 12 ist über das Druckhalte- und Druckregelventil PRV, welches als stromlos geschlossenes Magnetventil ausgeführt ist, mit den Radbremsen RB1, RB2 verbunden. Das Druckhalte- und Druckregelventil PRV ermöglicht ein Nachladen von Bremsfluid aus dem ersten Fluidbehälter 7V. Zum Nachladen der Fluidkammer 12.1 des ersten Plungersystems 12A wird das Druckhalte- und Druckregelventil PRV von der zweiten Auswerte- und Steuereinheit 24 geöffnet, damit das Plungersystem 12A kein Fluid aus den Radbremsen RB1, RB2 absaugen kann. Zudem weist der erste Bremskreis BKVAfür das erste Plungersystem 12A zusätzlich zur direkten Verbindung mit dem ersten Fluidbehälter 7V eine Saugleitung mit Rückschlagventil 18 auf, welche das erste Plungersystem 12A zusätzlich mit dem ersten Fluidbehälter 7V hydraulisch verbindet. Die Pumpe 22.1B des Pumpensystems 22B ist über eine Saugleitung direkt mit dem ersten Fluidbehälter 7V verbunden. Wie aus Fig. 5 weiter ersichtlich ist, sind die Radbremsen RB1, RB2 im dargestellten stromlosen Zustand über das Druckhalteund Druckregelventil PRV und den ersten Druckerzeuger 12 mit dem ersten Fluidbehälter 7V verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Hauptsystem 10A. Durch die in Verbindung mit Fig. 5 beschriebene Anordnung der beiden Druckerzeuger 12, 22 sind keine weiteren Absperrventile für den Betrieb des ersten Subbremssystems SubV erforderlich.

Wie aus Fig. 6 weiter ersichtlich ist, ist im dargestellten zweiten Ausführungsbeispiel des ersten Bremskreises BKVB der erste Druckerzeuger 12 als Plungersystem 12A ausgeführt und der zweite Druckerzeuger 22 ist als Pumpensystem 22B ausgeführt. Zudem umfasst der erste Fluidbehälter 7V im dargestellten Ausführungsbeispiel zwei getrennte Kammern 7.1, 7.2. Analog zum ersten Ausführungsbeispiel des ersten Bremskreises BKVA gemäß Fig. 5 umfasst der erste Bremskreis BKVB für den als Pumpensystem 22B ausgeführten zweiten Druckerzeuger 22 ein Druckhalte- und Druckregelventil PRV, welches dem Sekundärsystem 20B zugeordnet ist und von der zweiten Auswerte- und Steuereinheit 24 angesteuert und von der zweiten Energieversorgung EV2 mit Energie versorgt wird. Im Unterschied zum ersten Ausführungsbeispiel des ersten Bremskreises BKVA ist das Druckhalte- und Druckregelventil PRV im dargestellten zweiten Ausführungsbeispiel des ersten Bremskreises BKVB als stromlos offenes Magnetventil ausgeführt. Der als Plungersystem 12A ausgeführte erste Druckerzeuger 12 ist über ein Absperrventil RVP, welches als stromlos geschlossenes Magnetventil ausgeführt ist, mit den Radbremsen RB1, RB2 verbunden. Das Absperrventil RVP ermöglicht ein Nachladen von Bremsfluid aus einer ersten Kammer 7.1 des ersten Fluidbehälters 7V und ist dem Sekundärsystem 20B zugeordnet und wird von der zweiten Auswerte- und Steuereinheit 24 angesteuert und von der zweiten Energieversorgung EV2 mit Energie versorgt. Zum Nachladen der Fluidkammer 12.1 des ersten Plungersystems 12A wird das Absperrventil RVP von der zweiten Auswerte- und Steuereinheit 24 geöffnet, damit das Plungersystem 12A kein Fluid aus den Radbremsen RB1, RB2 absaugen kann. Zudem weist der erste Bremskreis BKVB für das erste Plungersystem 12A zusätzlich zur direkten Verbindung mit der ersten Kammer 7.1 des ersten Fluidbehälters 7V eine Saugleitung mit Rückschlagventil 18 auf, welche das erste Plungersystem 12A zusätzlich mit der ersten Kammer 7.1 des ersten Fluidbehälters 7V hydraulisch verbindet. Die Pumpe 22.1B des Pumpensystems 22B und das Druckhalte- und Druckregelventil PRV sind direkt mit einer zweiten Kammer 7.2 des ersten Fluidbehälters 7V verbunden. Wie aus Fig. 6 weiter ersichtlich ist, sind die Radbremsen RB1, RB2 im dargestellten stromlosen Zustand über das Absperrventil RVP und den ersten Druckerzeuger 12 mit dem ersten Fluidbehälter 7V verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Hauptsystem 10B.

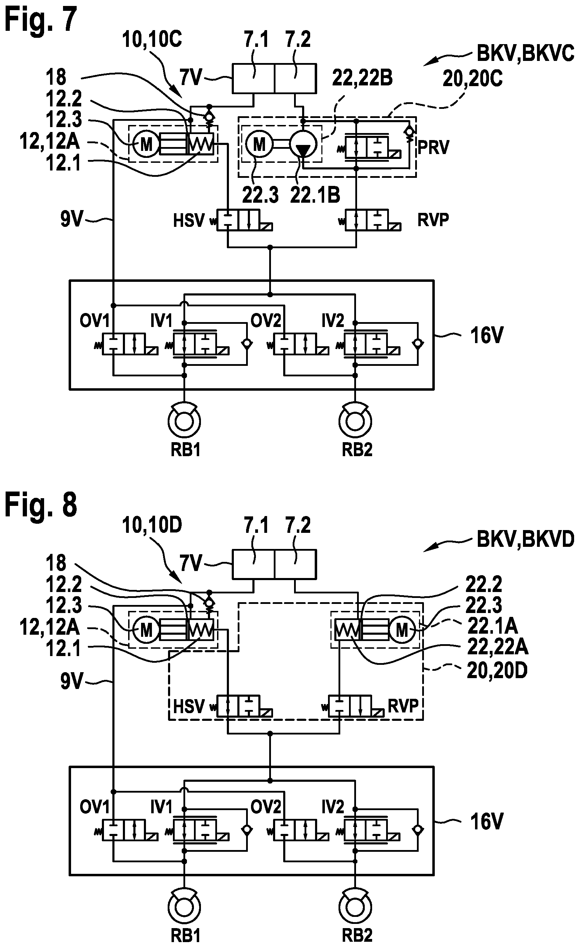

Wie aus Fig. 7 weiter ersichtlich ist, ist im dargestellten dritten Ausführungsbeispiel des ersten Bremskreises BKVC der erste Druckerzeuger 12 als Plungersystem 12A ausgeführt und der zweite Druckerzeuger 22 ist als Pumpensystem 22B ausgeführt. Zudem umfasst der erste Fluidbehälter 7V im dargestellten Ausführungsbeispiel zwei getrennte Kammern 7.1, 7.2. Analog zum ersten und zweiten Ausführungsbeispiel des ersten Bremskreises BKVA, BKVB gemäß Fig. 5 und 6 umfasst der erste Bremskreis BKVC für den als Pumpensystem 22B ausgeführten zweiten Druckerzeuger 22 ein Druckhalte- und Druckregelventil PRV, welches dem Sekundärsystem 20C zugeordnet ist und von der zweiten Auswerteund Steuereinheit 24 angesteuert und von der zweiten Energieversorgung EV2 mit Energie versorgt wird. Analog zum ersten Ausführungsbeispiel des ersten Bremskreises BKVA ist das Druckhalte- und Druckregelventil PRV im dargestellten dritten Ausführungsbeispiel des ersten Bremskreises BKVC als stromlos geschlossenes Magnetventil ausgeführt. Der als Plungersystem 12A ausgeführte erste Druckerzeuger 12 ist über ein erstes Absperrventil HSV, welches als stromlos offenes Magnetventil ausgeführt ist, mit den Radbremsen RB1, RB2 verbunden. Der als Pumpensystem 22B ausgeführte zweite Druckerzeuger 22 ist über ein zweites Absperrventil RVP, welches als stromlos geschlossenes Magnetventil ausgeführt ist, mit den Radbremsen RB1, RB2 verbunden. Die Absperrventile RVP, HSV sind im dargestellten dritten Ausführungsbeispiel des ersten Bremskreises BKVC dem Hauptsystem 10C zugeordnet und werden von der ersten Energieversorgung EV1 mit Energie versorgt und von der ersten Auswerte- und Steuereinheit 14 so angesteuert, dass bei Aktivierung von einem der beiden Druckerzeuger 12, 22 ein Hydraulikfluid nicht durch den anderen der beiden Druckerzeuger 12, 22 geleitet wird. Im dargestellten dritten Ausführungsbeispiel ist der erste Druckerzeuger 12 des Hauptsystems 10C im stromlosen Zustand durch das geöffnete erste Absperrventil HSV von den Radbremsen RB1, RB2 getrennt, und der zweite Druckerzeuger 22 ist über das geschlossene zweite Absperrventil RVP mit den Radbremsen RB1, RB2 verbunden. Das erste Absperrventil HSV ermöglicht ein Nachladen von Bremsfluid aus einer ersten Kammer 7.1 des ersten Fluidbehälters 7V. Zum Nachladen der Fluidkammer 12.1 des ersten Plungersystems 12A wird das erste Absperrventil HSV von der ersten Auswerte- und Steuereinheit 14 geöffnet, damit das Plungersystem 12A kein Fluid aus den Radbremsen RB1, RB2 absaugen kann. Zudem weist der erste Bremskreis BKVC für das erste Plungersystem 12A zusätzlich zur direkten Verbindung mit der ersten Kammer 7.1 des ersten Fluidbehälters 7V eine Saugleitung mit Rückschlagventil 18 auf, welche das erste Plungersystem 12A zusätzlich mit der ersten Kammer 7.1 des ersten Fluidbehälters 7V hydraulisch verbindet. Die Pumpe 22.1B des Pumpensystems 22B und das Druckhalte- und Druckregelventil PRV sind direkt mit einer zweiten Kammer 7.2 des ersten Fluidbehälters 7V verbunden. Wie aus Fig. 7 weiter ersichtlich ist, sind die Radbremsen RB1, RB2 im dargestellten stromlosen Zustand über das zweite Absperrventil RVP und das Druckhalte- und Druckregelventil PRV des zweiten Druckerzeugers 22 mit dem ersten Fluidbehälter 7V verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Sekundärsystem 20C.

Wie aus Fig. 8 weiter ersichtlich ist, ist im dargestellten vierten Ausführungsbeispiel des ersten Bremskreises BKVD der erste Druckerzeuger 12 und der zweite Druckerzeuger 22 jeweils als Plungersystem 12A, 22A ausgeführt. Analog zum zweiten und dritten Ausführungsbeispiel umfasst der erste Fluidbehälter 7V im dargestellten Ausführungsbeispiel zwei getrennte Kammern 7.1, 7.2. Wie aus Fig. 8 weiter ersichtlich ist, ist der als erstes Plungersystem 12A ausgeführte erste Druckerzeuger 12 über ein erstes Absperrventil HSV, welches als stromlos geschlossenes Magnetventil ausgeführt ist, mit den Radbremsen RB1, RB2 verbunden. Der als zweites Plungersystem 22A ausgeführte zweite Druckerzeuger 22 ist über ein zweites Absperrventil RVP, welches als stromlos offenes Magnetventil ausgeführt ist, mit den Radbremsen RB1, RB2 verbunden. Die Absperrventile RVP, HSV sind im dargestellten vierten Ausführungsbeispiel des ersten Bremskreises BKVD dem Sekundärsystem 20D zugeordnet und werden von der zweiten Energieversorgung EV2 mit Energie versorgt und von der zweiten Auswerte- und Steuereinheit 24 so angesteuert, dass bei Aktivierung von einem der beiden Druckerzeuger 12, 22 ein Hydraulikfluid nicht durch den anderen der beiden Druckerzeuger 12, 22 geleitet wird. Im dargestellten vierten Ausführungsbeispiel ist der erste Druckerzeuger 12 des Hauptsystems 10D im stromlosen Zustand über das geschlossene erste Absperrventil HSV mit den Radbremsen RB1, RB2 verbunden, und der zweite Druckerzeuger 22 ist durch das offene zweite Absperrventil RVP von den Radbremsen RB1, RB2 getrennt. Die Absperrventile HSV, RVP ermöglichen ein Nachladen von Bremsfluid aus dem ersten Fluidbehälter 7V. Zum Nachladen der Fluidkammer 12.1 des ersten Plungersystems 12A wird das erste Absperrventil HSV von der zweiten Auswerte- und Steuereinheit 24 geöffnet, damit das Plungersystem 12A kein Fluid aus den Radbremsen RB1, RB2 absaugen kann. Zum Nachladen der Fluidkammer 22.1 des zweiten Plungersystems 22A wird das zweite Absperrventil RVP von der zweiten Auswerteund Steuereinheit 24 geöffnet, damit das Plungersystem 22A kein Fluid aus den Radbremsen RB1, RB2 absaugen kann. Zudem weist der erste Bremskreis BKVD für das erste Plungersystem 12A zusätzlich zur direkten Verbindung mit der ersten Kammer 7.1 des ersten Fluidbehälters 7V eine Saugleitung mit Rückschlagventil 18 auf, welche das erste Plungersystem 12A zusätzlich mit der ersten Kammer 7.1 des ersten Fluidbehälters 7V hydraulisch verbindet. Das zweite Plungersystem 22A ist direkt mit der zweiten Kammer 7.2 des ersten Fluidbehälters 7V verbunden. Wie aus Fig. 8 weiter ersichtlich ist, sind die Radbremsen RB1, RB2 im dargestellten stromlosen Zustand über das erste Absperrventil HSV und den ersten Druckerzeuger 12 mit dem ersten Fluidbehälter 7V verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Hauptsystem 10D.

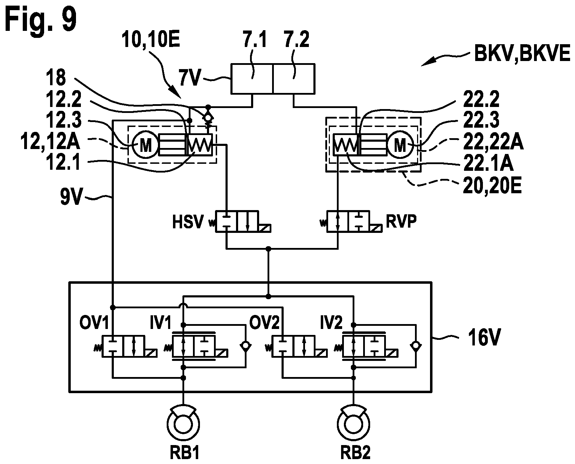

Wie aus Fig. 9 weiter ersichtlich ist, sind im dargestellten fünften Ausführungsbeispiel des ersten Bremskreises BKVE der erste Druckerzeuger 12 und der zweite Druckerzeuger 22 analog zum vierten Ausführungsbeispiel jeweils als Plungersystem 12A, 22A ausgeführt, und der erste Fluidbehälter 7V umfasst im dargestellten Ausführungsbeispiel zwei getrennte Kammern 7.1, 7.2. Wie aus Fig. 9 weiter ersichtlich ist, ist der als erstes Plungersystem 12A ausgeführte erste Druckerzeuger 12 über ein erstes Absperrventil HSV, welches als stromlos offenes Magnetventil ausgeführt ist, mit den Radbremsen RB1, RB2 verbunden. Der als zweites Plungersystem 22A ausgeführte zweite Druckerzeuger 22 ist über ein zweites Absperrventil RVP, welches als stromlos geschlossenes Magnetventil ausgeführt ist, mit den Radbremsen RB1, RB2 verbunden. Die Absperrventile RVP, HSV sind im dargestellten fünften Ausführungsbeispiel des ersten Bremskreises BKVE dem Hauptsystem 10E zugeordnet und werden von der ersten Energieversorgung EV1 mit Energie versorgt und von der ersten Auswerte- und Steuereinheit 14 so angesteuert, dass bei Aktivierung von einem der beiden Druckerzeuger 12, 22 ein Hydraulikfluid nicht durch den anderen der beiden Druckerzeuger 12, 22 geleitet wird. Im dargestellten fünften Ausführungsbeispiel ist der erste Druckerzeuger 12 des Hauptsystems 10E im stromlosen Zustand durch das offene erste Absperrventil HSV von den Radbremsen RB1, RB2 getrennt, und der zweite Druckerzeuger 22 ist über das geschlossene zweite Absperrventil RVP mit den Radbremsen RB1, RB2 verbunden. Die Absperrventile HSV, RVP ermöglichen ein Nachladen von Bremsfluid aus dem ersten Fluidbehälter 7V. Zum Nachladen der Fluidkammer 12.1 des ersten Plungersystems 12A wird das erste Absperrventil HSV von der ersten Auswerte- und Steuereinheit 24 geöffnet, damit das Plungersystem 12A kein Fluid aus den Radbremsen RB1, RB2 absaugen kann. Zum Nachladen der Fluidkammer 22.1 des zweiten Plungersystems 22A wird das zweite Absperrventil RVP von der ersten Auswerteund Steuereinheit 24 geöffnet, damit das Plungersystem 22A kein Fluid aus den Radbremsen RB1, RB2 absaugen kann. Zudem weist der erste Bremskreis BKVE für das erste Plungersystem 12A zusätzlich zur direkten Verbindung mit der ersten Kammer 7.1 des ersten Fluidbehälters 7V eine Saugleitung mit Rückschlagventil 18 auf, welche das erste Plungersystem 12A zusätzlich mit der ersten Kammer 7.1 des ersten Fluidbehälters 7V hydraulisch verbindet. Das zweite Plungersystem 22A ist direkt mit der zweiten Kammer 7.2 des ersten Fluidbehälters 7V verbunden. Wie aus Fig. 9 weiter ersichtlich ist, sind die Radbremsen RB1, RB2 im dargestellten stromlosen Zustand über das zweite Absperrventil RVP und den zweiten Druckerzeuger 22 mit dem ersten Fluidbehälter 7V verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen" durch das Sekundärsystem 20E.

Bei nicht dargestellten alternativen Ausführungsbeispielen können die Druckerzeuger 12, 22, 32 jeweils als Pumpensystem mit Druckspeicher oder als elektrohydraulische Aktuatoren ausgeführt werden.

Ausführungsformen der vorliegenden Erfindung stellen ein hydraulisches Bremssystem für ein Fahrzeug mit mindestens zwei Achsen, insbesondere für ein hochautomatisiertes oder autonomes Fahrzeug, ohne mechanischen und/oder hydraulischen Durchgriff durch den Fahrer zur Verfügung, welches auch im Fehlerfall durch drei Druckerzeuger und ein geeignetes Redundanzkonzept eine ausreichende Bremsperformance ermöglicht. Von den drei Druckerzeugern sind zwei in ein redundantes Subbremssystem in paralleler Verschaltung an einer ersten Achse, vorzugsweise an einer Vorderachse implementiert. Der dritte Druckerzeuger ist in einem weiteren Subbremssystem an einer zweiten Achse, vorzugweise an einer Hinterachse implementiert. Zwischen den Subbremssystemen an den verschiedenen Achsen besteht keine hydraulische Verbindung.

## Patentansprüche

1. Hydraulisches Bremssystem (1) für ein Fahrzeug mit mindestens zwei Achsen (VA, HA), insbesondere für ein hochautomatisiertes oder autonomes Fahrzeug, mit mindestens zwei voneinander hydraulisch getrennten Subbremssystemen (SubV, SubH), wobei ein erstes Subbremssystem (SubV) einen ersten Bremskreis (BKV), ein Hauptsystem (10), welches eine erste Energieversorgung (EV1) und eine erste Auswerte- und Steuereinheit (14) aufweist, und ein Sekundärsystem (20), welches eine von der ersten Energieversorgung (EV1) unabhängige zweite Energieversorgung (EV2) und eine zweite Auswerte- und Steuereinheit (24) aufweist, zur redundanten Druckerzeugung im ersten Bremskreis (BKV) umfasst und einer ersten Achse (VA) mit mindestens zwei Radbremsen (RB1, RB2) zugeordnet ist, wobei der erste Bremskreis (BKV) einen dem Hauptsystem (10) zugeordneten ersten Druckerzeuger (12), einen dem Sekundärsystem (20) zugeordneten zweiten Druckerzeuger (22), welche zwischen einem ersten Fluidbehälter (7V) und den mindestens zwei Radbremsen (RB1, RB2) der ersten Achse (VA) hydraulisch parallel geschaltet sind, und eine erste Modulationseinheit (16V) zur hydraulischen Verbindung der Druckerzeuger (12, 22) mit den mindestens zwei Radbremsen (RB1, RB2) und zur individuellen Bremsdruckmodulation in den mindestens zwei Radbremsen (RB1, RB2) umfasst, wobei ein zweites Subbremssystem (SubH) einen zweiten Bremskreis (BKH) und ein Nebensystem (30), welches eine dritte Energieversorgung (EV3) und eine dritte Auswerte- und Steuereinheit (34) aufweist, zur Druckerzeugung im zweiten Bremskreis (BKH) umfasst und einer zweiten Achse (VA) mit mindestens zwei Radbremsen (RB3, RB4) zugeordnet ist, wobei der zweite Bremskreis (BKH) einen dem Nebensystem (30) zugeordneten dritten Druckerzeuger (32), welcher zwischen einem zweiten Fluidbehälter (7H) und den mindestens zwei Radbremsen (RB3, RB4) der zweiten Achse (HA) angeordnet ist, und eine zweite Modulationseinheit (16H) zur hydraulischen Verbindung des Druckerzeugers (32) mit den mindestens zwei Radbremsen (RB3, RB4) und zur individuellen Bremsdruckmodulation in den mindestens zwei Radbremsen (RB3, RB4) umfasst.

2. Bremssystem (1) nach Anspruch 1, **dadurch gekennzeichnet, dass** die erste Modulationseinheit (16V) und/oder die zweite Modulationseinheit (16H) für jede der zugeordneten Radbremsen (RB1, RB2, RB3, RB4) zur individuellen Bremsdruckmodulation jeweils ein Einlassventil (IV1, IV2, IV3, IV4) und jeweils ein Auslassventil (OV1, OV2, OV3, OV4) umfasst.

3. Bremssystem (1) nach Anspruch 2, **dadurch gekennzeichnet, dass** das erste Subbremssystem (SubV) und/oder das zweite Subbremssystem (SubH) als hydraulisch offene Systeme ausgeführt sind, wobei ein erster Druckablasspfad (9V) im ersten Subbremssystem (SubV) die Auslassventile (OV1, OV2) der zugeordneten Radbremsen (RB1, RB2) der ersten Achse (VA) mit dem ersten Fluidbehälter (7V) verbindet, und wobei ein zweiter Druckablasspfad (9H) im zweiten Subbremssystem (SubH) die Auslassventile (OV3, OV4) der zugeordneten Radbremsen (RB3, RB4) der zweiten Achse (HA) mit dem zweiten Fluidbehälter (7H) verbindet.

4. Bremssystem (1) nach einem der Ansprüche 1 bis 3, **dadurch gekennzeichnet, dass** die Druckerzeuger (12, 22, 32) jeweils als Plungersystem (12A, 22A, 32A) oder als Pumpensystem (22B) oder als Pumpensystem mit Druckspeicher oder als elektrohydraulische Aktuatoren ausgeführt sind.

5. Bremssystem (1) nach Anspruch 4, **dadurch gekennzeichnet, dass** der erste Druckerzeuger (12) des Hauptsystems (10) als erstes Plungersystem (12A) und der zweiter Druckerzeuger (22) als zweites Plungersystem (22A) oder als Pumpensystem (22B) und der dritte Druckerzeuger (32) des Nebensystems (30) als drittes Plungersystem (32A) ausgeführt ist.

6. Bremssystem (1) nach Anspruch 5, **dadurch gekennzeichnet, dass** der erste Druckerzeuger (12) als erstes Plungersystem (12A) und der zweite Druckerzeuger (22) als Pumpensystem (22B) ausgeführt sind.

7. Bremssystem (1) nach Anspruch 5 oder 6, **dadurch gekennzeichnet, dass** der erste Bremskreis (BKV, BKVA, BKVB, BKVC) für den als Pumpensystem (22B) ausgeführten zweiten Druckerzeuger (22) ein Druckhalte- und Druckregelventil (PRV) aufweist, welches dem Sekundärsystem (20) zugeordnet ist und von der zweiten Auswerte- und Steuereinheit (24) angesteuert und von der zweiten Energieversorgung (EV2) mit Energie versorgt wird.

8. Bremssystem (1) nach Anspruch 6 oder 7, **dadurch gekennzeichnet, dass** der als erstes Plungersystem (12A) ausgeführte erste Druckerzeuger (12) über ein erstes Magnetventil, welches ein Nachladen von Bremsfluid aus dem ersten Fluidbehälter (7V) ermöglicht, hydraulisch mit der ersten und zweiten Radbremse (RB1, RB2) verbindbar ist, und der als Pumpensystem (22B) ausgeführte zweite Druckerzeuger (22) direkt mit der ersten und zweiten Radbremse (RB1, RB2) verbunden ist.

9. Bremssystem (1) nach Anspruch 8, **dadurch gekennzeichnet, dass** das erste Magnetventil ein erstes Absperrventil (RVP) ist, welches dem Sekundärsystem (20) zugeordnet ist und von der zweiten Auswerte- und Steuereinheit (24) angesteuert und von der zweiten Energieversorgung (EV2) mit Energie versorgt wird.

10. Bremssystem (1) nach Anspruch 8, **dadurch gekennzeichnet, dass** das erste Magnetventil das Druckhalte- und Druckregelventil (PRV) des als Pumpensystem (22B) ausgeführten zweiten Druckerzeugers (22) ist.

11. Bremssystem (1) nach Anspruch 5, **dadurch gekennzeichnet, dass** der erste Druckerzeuger (12) über ein erstes Absperrventil (RVP, HSV) mit der ersten und zweiten Radbremse (RB1, RB2) verbindbar ist, wobei der zweite Druckerzeuger (22) über ein zweites Absperrventil (HSV, RVP) mit der ersten und zweiten Radbremse (RB1, RB2) verbindbar ist.

12. Bremssystem (1) nach Anspruch 11, **dadurch gekennzeichnet, dass** die Absperrventile (RVP, HSV) dem Hauptsystem (10, 10C, 10E) zugeordnet sind und von der ersten Energieversorgung (EV1) mit Energie versorgt und von der ersten Auswerte- und Steuereinheit (14) so ansteuerbar sind, dass bei Aktivierung von einem der beiden Druckerzeuger (12, 22) ein Hydraulikfluid nicht durch den anderen der beiden Druckerzeuger (12, 22) geleitet wird.

13. Bremssystem (1) nach Anspruch 11, **dadurch gekennzeichnet, dass** die Absperrventile (RVP, HSV) dem Sekundärsystem (20, 20D) zugeordnet sind und von der zweiten Energieversorgung (EV2) mit Energie versorgt und von der zweiten Auswerte- und Steuereinheit (24) so ansteuerbar sind, dass bei Aktivierung von einem der beiden Druckerzeuger (12, 22) ein Hydraulikfluid nicht durch den anderen der beiden Druckerzeuger (12, 22) geleitet wird.

14. Bremssystem (1) nach einem der Ansprüche 5 bis 13, **dadurch gekennzeichnet, dass** der zweite Bremskreis (BKH) für den als drittes Plungersystem (32A) ausgeführten Druckerzeuger (32) ein Absperrventil (RVP) aufweist, welches ein Nachladen von Bremsfluid aus dem zweiten Fluidbehälter (7H) ermöglicht.

15. Bremssystem (1) nach einen der Ansprüche 5 bis 13, **dadurch gekennzeichnet, dass** der erste Bremskreis (BKV) für den als erstes Plungersystem (12A) ausgeführten ersten Druckerzeuger (12) eine Saugleitung mit Rückschlagventil (18) aufweist, welche das erste Plungersystem (12) zusätzlich mit dem ersten Fluidbehälter (7V) hydraulisch verbindet, wobei der zweite Bremskreis (BKH) für den als drittes Plungersystem (32A) ausgeführten dritten Druckerzeuger (32) eine Saugleitung mit Rückschlagventil (38) aufweist, welche das dritte Plungersystem (12) zusätzlich mit dem zweiten Fluidbehälter (7V) hydraulisch verbindet.

16. Bremssystem (1) nach einem der Ansprüche 1 bis 15, **dadurch gekennzeichnet, dass** die Auswerte- und Steuereinheiten (14, 24, 34) der Subbremssysteme (SubV, SubH) über ein Bussystem miteinander kommunizieren, wobei die erste und zweite Auswerte- und Steuereinheit (14, 24) des ersten Subbremssystems (SubV) als Master und die dritte Auswerte- und Steuereinheit (34) des zweiten Subbremssystems (SubH) als Slave implementiert sind.

17. Bremssystem (1) nach einem der Ansprüche 1 bis 16, **dadurch gekennzeichnet, dass** Komponenten der ersten Modulationseinheit (16V) zur individuellen Bremsdruckmodulation dem Hauptsystem (10) zugeordnet sind, so dass diese Komponenten der Hydraulikeinheit (16) und der erste Druckerzeuger (12) von der ersten Auswerte- und Steuereinheit (14) angesteuert und von der ersten Energieversorgung (EV1) mit Energie versorgt werden.

18. Bremssystem (1) nach einem der Ansprüche 1 bis 17, **dadurch gekennzeichnet, dass** Komponenten der zweiten Modulationseinheit (16H) zur individuellen Bremsdruckmodulation dem Nebensystem (30) zugeordnet sind, so dass diese Komponenten der zweiten Modulationseinheit (16H) und der dritte Druckerzeuger (32) von der dritten Auswerte- und Steuereinheit (34) angesteuert und von der dritten Energieversorgung (EV3) mit Energie versorgt werden.

19. Bremssystem (1) nach einem der Ansprüche 1 bis 18, **dadurch gekennzeichnet, dass** die erste Achse (VA) eine Vorderachse und die zweite Achse (HA) eine Hinterachse des Fahrzeugs ist.

## Claims

1. Hydraulic brake system (1) for a vehicle having at least two axles (VA, HA), in particular for a highly automated or autonomous vehicle, having at least two sub-brake systems (SubV, SubH) which are hydraulically separated from one another, wherein a first sub-brake system (SubV) comprises a first brake circuit (BKV), a main system (10), which has a first power supply (EV1), and a first evaluation and control unit (14), **characterized by** a secondary system (20), which has a second power supply (EV2), which is independent of the first power supply (EV1), and a second evaluation and control unit (24), for redundantly generating pressure in the first brake circuit (BKV), and is assigned to a first axle (VA) having at least two wheel brakes (RB1, RB2), wherein the first brake circuit (BKV) comprises a first pressure generator (12) which is assigned to the main system (10), a second pressure generator (22) which is assigned to the secondary system (20) and is hydraulically connected in parallel between a first fluid container (7V) and the at least two wheel brakes (RB1, RB2) of the first axle (VA), and a first modulation unit (16V) for hydraulically connecting the pressure generators (12, 22) to the at least two wheel brakes (RB1, RB2) and for performing individual brake pressure modulation in the at least two wheel brakes (RB1, RB2), wherein a second sub-brake system (SubH) comprises a second brake circuit (BKH) and a subsidiary system (30) which has a third power supply (EV3) and a third evaluation and control unit (34), for generating pressure in the second brake circuit (BKH), and is assigned to a second axle (VA) having at least two wheel brakes (RB3, RB4), wherein the second brake circuit (BKH) comprises a third pressure generator (32) which is assigned to the subsidiary system (30) and is arranged between a second fluid container (7H) and the at least two wheel brakes (RB3, RB4) of the second axle (HA), and a second modulation unit (16H) for hydraulically connecting the pressure generator (32) to the at least two wheel brakes (RB3, RB4) and for performing individual brake pressure modulation in the at least two wheel brakes (RB3, RB4).

2. Brake system (1) according to Claim 1, **characterized in that** the first modulation unit (16V) and/or the second modulation unit (16H) respectively comprises an inlet valve (IV1, IV2, IV3, IV4) and respectively comprises an outlet valve (OV1, OV2, OV3, OV4) for each of the assigned wheel brakes (RB1, RB2, RB3, RB4) for performing individual brake pressure modulation.

3. Brake system (1) according to Claim 2, **characterized in that** the first sub-brake system (SubV) and/or the second sub-brake system (SubH) are embodied as hydraulically open systems, wherein a first pressure discharge path (9V) in the first sub-brake system (SubV) connects the outlet valves (OV1, OV2) of the assigned wheel brakes (RB1, RB2) of the first axle (VA) to the first fluid container (7V), and wherein a second pressure discharge path (9H) in the second sub-brake system (SubH) connects the outlet valves (OV3, OV4) of the assigned wheel brakes (RB3, RB4) of the second axle (HA) to the second fluid container (7H).

4. Brake system (1) according to one of Claims 1 to 3, **characterized in that** the pressure generators (12, 22, 32) are each embodied as a plunger system (12A, 22A, 32A) or as a pump system (22B) or as a pump system with a pressure accumulator or as electrohydraulic actuators.

5. Brake system (1) according to Claim 4, **characterized in that** the first pressure generator (12) of the main system (10) is embodied as a first plunger system (12A), and the second pressure generator (22) is embodied as a second plunger system (22A) or as a pump system (22B), and the third pressure generator (32) of the subsidiary system (30) is embodied as a third plunger system (32A).

6. Brake system (1) according to Claim 5, **characterized in that** the first pressure generator (12) is embodied as a first plunger system (12A), and the second pressure generator (22) is embodied as a pump system (22B).

7. Brake system (1) according to Claim 5 or 6, **characterized in that** the first brake circuit (BKV, BKVA, BKVB, BKVC) has, for the second pressure generator (22) embodied as a pump system (22B), a pressure maintenance and control valve (PRV) which is assigned to the secondary system (20) and is actuated by the second evaluation and control unit (24) and supplied with power by the second power supply (EV2).

8. Brake system (1) according to Claim 6 or 7, **characterized in that** the first pressure generator (12) which is embodied as a first plunger system (12A) can be connected hydraulically to the first and second wheel brakes (RB1, RB2) via a first solenoid valve which permits recharging of brake fluid from the first fluid container (7V), and the second pressure generator (22) which is embodied as a pump system (22B) is connected directly to the first and second wheel brakes (RB1, RB2).

9. Brake system (1) according to Claim 8, **characterized in that** the first solenoid valve is a first shutoff valve (RVP) which is assigned to the secondary system (20) and is actuated by the second evaluation and control unit (24) and supplied with power by the second power supply (EV2).

10. Brake system (1) according to Claim 8, **characterized in that** the first solenoid valve is the pressure maintenance and control valve (PRV) of the second pressure generator (22) which is embodied as a pump system (22B).

11. Brake system (1) according to Claim 5, **characterized in that** the first pressure generator (12) can be connected to the first and second wheel brakes (RB1, RB2) via a first shutoff valve (RVP, HSV), wherein the second pressure generator (22) can be connected to the first and second wheel brakes (RB1, RB2) via a second shutoff valve (HSV, RVP) .

12. Brake system (1) according to Claim 11, **characterized in that** the shutoff valves (RVP, HSV) are assigned to the main system (10, 10C, 10E) and are supplied with power by the first power supply (EV1) and can be actuated by the first evaluation and control unit (14) in such a way that when one of the two pressure generators (12, 22) is activated a hydraulic fluid is not fed through the other of the two pressure generators (12, 22).

13. Brake system (1) according to Claim 11, **characterized in that** the shutoff valves (RVP, HSV) are assigned to the secondary system (20, 20D) and are supplied with power by the second power supply (EV2), and can be actuated by the second evaluation and control unit (24) in such a way that when one of the two pressure generators (12, 22) is activated a hydraulic fluid is not fed through the other of the two pressure generators (12, 22).

14. Brake system (1) according to one of Claims 5 to 13, **characterized in that** the second brake circuit (BKH) has, for the pressure generator (32) which is embodied as a third plunger system (32A), a shutoff valve (RVP) which makes it possible to recharge brake fluid from the second fluid container (7H).

15. Brake system (1) according to one of Claims 5 to 13, **characterized in that** the first brake circuit (BKV) has, for the first pressure generator (12) which is embodied as a first plunger system (12A), a suction line with a nonreturn valve (18) which additionally connects the first plunger system (12) hydraulically to the first fluid container (7V), wherein the second brake circuit (BKH) has, for the third pressure generator (32) which is embodied as a third plunger system (32A), a suction line with a nonreturn valve (38) which additionally connects the third plunger system (12) hydraulically to the second fluid container (7V).

16. Brake system (1) according to one of Claims 1 to 15, **characterized in that** the evaluation and control units (14, 24, 34) of the sub-brake systems (SubV, SubH) communicate with one another via a bus system, wherein the first and second evaluation and control units (14, 24) of the first sub-brake system (SubV) are implemented as a master, and the third evaluation and control unit (34) of the second sub-brake system (SubH) is implemented as a slave.

17. Brake system (1) according to one of Claims 1 to 16, **characterized in that** components of the first modulation unit (16V) for performing individual brake pressure modulation are assigned to the main system (10), so that these components of the hydraulic unit (16) and the first pressure generator (12) are actuated by the first evaluation and control unit (14) and supplied with power by the first power supply (EV1).

18. Brake system (1) according to one of Claims 1 to 17, **characterized in that** components of the second modulation unit (16H) for performing individual brake pressure modulation are assigned to the subsidiary system (30), so that these components of the second modulation unit (16H) and the third pressure generator (32) are actuated by the third evaluation and control unit (34) and supplied with power by the third power supply (EV3).

19. Brake system (1) according to one of Claims 1 to 18, **characterized in that** the first axle (VA) is a front axle, and the second axle (HA) is a rear axle, of the vehicle

## Revendications

1. Système de freinage hydraulique (1) pour un véhicule pourvu d'au moins deux essieux (VA, HA), en particulier pour un véhicule hautement automatisé ou autonome, comprenant au moins deux sous-systèmes de freinage (SubV, SubH) séparés hydrauliquement l'un de l'autre, un premier sous-système de freinage (SubV) présentant un premier circuit de freinage (BKV), un système principal (10) qui présente une première source d'énergie (EV1) et une première unité d'évaluation et de commande (14),
**caractérisé par** un système secondaire (20) qui présente une deuxième source d'énergie (EV2) indépendante de la première source d'énergie (EV1) et une deuxième unité d'évaluation et de commande (24), servant à la génération de pression redondante dans le premier circuit de freinage (BKV) et étant associé à un premier essieu (VA) pourvu d'au moins deux freins de roue (RB1, RB2), le premier circuit de freinage (BKV) comprenant un premier générateur de pression (12) associé au système principal (10), un deuxième générateur de pression (22) associé au système secondaire (20), qui sont connectés hydrauliquement en parallèle entre un premier réservoir de fluide (7V) et les au moins deux freins de roue (RB1, RB2) du premier essieu (VA), et une première unité de modulation (16V) servant au raccordement hydraulique des générateurs de pression (12, 22) auxdits au moins deux freins de roue (RB1, RB2) et à la modulation de pression de freinage individuelle dans les au moins deux freins de roue (RB1, RB2), un deuxième sous-système de freinage (SubH) comprenant un deuxième circuit de freinage (BKH) et un système auxiliaire (30) qui présente une troisième source d'énergie (EV3) et une troisième unité d'évaluation et de commande (34), servant à la génération de pression dans le deuxième circuit de freinage (BKH) et étant associé à un deuxième essieu (VA) pourvu d'au moins deux freins de roue (RB3, RB4), le deuxième circuit de freinage (BKH) comprenant un troisième générateur de pression (32) associé au système auxiliaire (30) et qui est disposé entre un deuxième réservoir de fluide (7H) et les au moins deux freins de roue (RB3, RB4) du deuxième essieu (HA), et une deuxième unité de modulation (16H) servant au raccordement hydraulique du générateur de pression (32) auxdits au moins deux freins de roue (RB3, RB4) et à la modulation de pression de freinage individuelle dans les au moins deux freins de roue (RB3, RB4).

2. Système de freinage (1) selon la revendication 1, **caractérisé en ce que** la première unité de modulation (16V) et/ou la deuxième unité de modulation (16H) comprend pour chacun des freins de roue (RB1, RB2, RB3, RB4) associés servant à la modulation de pression de freinage individuelle respectivement une soupape d'admission (IV1, IV2, IV3, IV4) et respectivement une soupape d'échappement(OV1, OV2, OV3, OV4).

3. Système de freinage (1) selon la revendication 2, **caractérisé en ce que** le premier sous-système de freinage (SubV) et/ou le deuxième sous-système de freinage (SubH) sont réalisés sous la forme de systèmes hydrauliquement ouverts, un premier chemin de décharge de pression (9V) dans le premier sous-système de freinage (SubV) raccordant les soupapes d'échappement (OV1, OV2) des freins de roue (RB1, RB2) associés du premier essieu (VA) au premier réservoir de fluide (7V), et un deuxième chemin de décharge de pression (9H) dans le deuxième sous-système de freinage (SubH) raccordant les soupapes d'échappement (OV3, OV4) des freins de roue (RB3, RB4) associés du deuxième essieu (HA) au deuxième réservoir de fluide (7H).

4. Système de freinage (1) selon l'une quelconque des revendications 1 à 3, **caractérisé en ce que** les générateurs de pression (12, 22, 32) sont respectivement réalisés sous forme de système à piston plongeur (12A, 22A, 32A) ou de système de pompe (22B) ou de système de pompe à accumulateur de pression ou d'actionneurs électrohydrauliques.

5. Système de freinage (1) selon la revendication 4, **caractérisé en ce que** le premier générateur de pression (12) du système principal (10) est réalisé sous forme de premier système à piston plongeur (12A) et le deuxième générateur de pression (22) est réalisé sous forme de deuxième système à piston plongeur (22A) ou de système de pompe (22B) et le troisième générateur de pression (32) du système auxiliaire (30) est réalisé sous forme de troisième système à piston plongeur (32A) .

6. Système de freinage (1) selon la revendication 5, **caractérisé en ce que** le premier générateur de pression (12) est réalisé sous forme de premier système à piston plongeur (12A) et le deuxième générateur de pression (22) est réalisé sous forme de système de pompe (22B).

7. Système de freinage (1) selon la revendication 5 ou 6, **caractérisé en ce que** le premier circuit de freinage (BKV, BKVA, BKVB, BKVC) présente pour le deuxième générateur de pression (22) réalisé sous forme de système de pompe (22B) une soupape de maintien et de régulation de pression (PRV) qui est associée au système secondaire (20) et est pilotée par la deuxième unité d'évaluation et de commande (24) et est alimentée en énergie par la deuxième source d'énergie (EV2).

8. Système de freinage (1) selon la revendication 6 ou 7, **caractérisé en ce que** le premier générateur de pression (12) réalisé sous forme de premier système à piston plongeur (12A) peut être raccordé hydrauliquement par l'intermédiaire d'une première électrovanne, qui permet une recharge en fluide de freinage à partir du premier réservoir de fluide (7V), au premier et au deuxième frein de roue (RB1, RB2), et le deuxième générateur de pression (22) réalisé sous forme de système de pompe (22B) est raccordé directement au premier et au deuxième frein de roue (RB1, RB2).

9. Système de freinage (1) selon la revendication 8, **caractérisé en ce que** la première électrovanne est une première soupape d'arrêt (RVP) qui est associée au système secondaire (20) et est pilotée par la deuxième unité d'évaluation et de commande (24) et est alimentée en énergie par la deuxième source d'énergie (EV2).

10. Système de freinage (1) selon la revendication 8, **caractérisé en ce que** la première électrovanne est la soupape de maintien et de régulation de pression (PRV) du deuxième générateur de pression (22) réalisé sous forme de système de pompe (22B).

11. Système de freinage (1) selon la revendication 5, **caractérisé en ce que** le premier générateur de pression (12) peut être raccordé au premier et au deuxième frein de roue (RB1, RB2) par l'intermédiaire d'une première soupape d'arrêt (RVP, HSV), le deuxième générateur de pression (22) pouvant être raccordé au premier et au deuxième frein de roue (RB1, RB2) par l'intermédiaire d'une deuxième soupape d'arrêt (HSV, RVP).

12. Système de freinage (1) selon la revendication 11, **caractérisé en ce que** les soupapes d'arrêt (RVP, HSV) sont associées au système principal (10, 10C, 10E) et sont alimentées en énergie par la première source d'énergie (EV1) et peuvent être pilotées par la première unité d'évaluation et de commande (14) de telle sorte qu'en cas d'activation d'un des deux générateurs de pression (12, 22), aucun fluide hydraulique n'est acheminé par l'autre des deux générateurs de pression (12, 22).

13. Système de freinage (1) selon la revendication 11, **caractérisé en ce que** les soupapes d'arrêt (RVP, HSV) sont associées au système secondaire (20, 20D) et sont alimentées en énergie par la deuxième source d'énergie (EV2) et peuvent être pilotées par la deuxième unité d'évaluation et de commande (24) de telle sorte qu'en cas d'activation d'un des deux générateurs de pression (12, 22), aucun fluide hydraulique n'est acheminé par l'autre des deux générateurs de pression (12, 22).

14. Système de freinage (1) selon l'une quelconque des revendications 5 à 13, **caractérisé en ce que** le deuxième circuit de freinage (BKH) présente pour le générateur de pression (32) réalisé sous forme de troisième système à piston plongeur (32A) une soupape d'arrêt (RVP) qui permet une recharge en fluide de freinage à partir du deuxième réservoir de fluide (7H).

15. Système de freinage (1) selon l'une quelconque des revendications 5 à 13, **caractérisé en ce que** le premier circuit de freinage (BKV) présente pour le premier générateur de pression (12) réalisé sous forme de premier système à piston plongeur (12A) une conduite d'aspiration pourvue d'un clapet antiretour (18) qui raccorde hydrauliquement le premier système à piston plongeur (12) en plus au premier réservoir de fluide (7V), le deuxième circuit de freinage (BKH) présentant pour le troisième générateur de pression (32) réalisé sous forme de troisième système à piston plongeur (32A) une conduite d'aspiration pourvue d'un clapet antiretour (38) qui raccorde hydrauliquement le troisième système à piston plongeur (12) en plus au deuxième réservoir de fluide (7V).

16. Système de freinage (1) selon l'une quelconque des revendications 1 à 15, **caractérisé en ce que** les unités d'évaluation et de commande (14, 24, 34) des sous-systèmes de freinage (SubV, SubH) communiquent entre elles par un système de bus, la première et la deuxième unité d'évaluation et de commande (14, 24) du premier sous-système de freinage (SubV) étant mises en œuvre comme maîtres et la troisième unité d'évaluation et de commande (34) du deuxième sous-système de freinage (SubH) étant mise en œuvre comme esclave.

17. Système de freinage (1) selon l'une quelconque des revendications 1 à 16, **caractérisé en ce que** des composants de la première unité de modulation (16V) servant à la modulation de pression de freinage individuelle sont associés au système principal (10) de sorte que ces composants de l'unité hydraulique (16) et le premier générateur de pression (12) sont pilotés par la première unité d'évaluation et de commande (14) et sont alimentés en énergie par la première source d'énergie (EV1).

18. Système de freinage (1) selon l'une quelconque des revendications 1 à 17, **caractérisé en ce que** des composants de la deuxième unité de modulation (16H) servant à la modulation de pression de freinage individuelle sont associés au système auxiliaire (30) de sorte que ces composants de la deuxième unité de modulation (16H) et le troisième générateur de pression (32) sont pilotés par la troisième unité d'évaluation et de commande (34) et sont alimentés en énergie par la troisième source d'énergie (EV3).

19. Système de freinage (1) selon l'une quelconque des revendications 1 à 18, **caractérisé en ce que** le premier essieu (VA) est un essieu avant et le deuxième essieu (HA) est un essieu arrière du véhicule.
